# EUROPEAN PATENT APPLICATION

(11) **EP 1 708 102 A2**
(43) Date of publication of application: **04.10.2006**
(21) Application number: 06006692.5
(22) Date of filing: 30.03.2006
(51) Int. Cl.: G06F 17/30

(54) **Search engine desktop application tool**

(30) Priority: 01.04.2005 US 96844; 28.06.2005 US 694752 P
(71) Applicant: Submitnet, Inc., Portland OR 97204 (US)
(72) Inventor: Benton, Randall S., Tigrad, Oregon 97223 (US); McMenamin/Benton, Shirley, L., Tigrad, Oregon 97223 (US)
(74) Representative: Haeusler, Rüdiger Hans-Jörg

(57) **Abstract**

In an embodiment of the present invention, a software application is configured to remain active on a user's "local" computer system. The software automatically establishes communication sessions between the local computer system and a server computer system at a remote location. Computers properly configured with elements of the present invention communicate with servers that monitor and control SEO, SEM and search engine account information. The software application preferably provides proprietors with SEO, SEM and search engine portal information with notices that are directly sent to their computers. In an alternative embodiment, a search engine short message service notification system and method is disclosed.

## Description

### Field of the Invention

The present invention relates to Internet search engine listings, and, more particularly, to a desktop application tool that interfaces with a centrally located database to provide information regarding Internet search engine listings.

### Description of the Related Art

Locating content stored on computer systems connected to the Internet remains a daunting task. Currently, over eight billion web pages are estimated to be published over the Internet. As the number of web pages grows, so does the number of pages indexed by search engines. According to various research firms like JUPITER RESEARCH, over eighty percent of online users use search engines to locate content stored on web sites. According to STATISTICAL RESEARCH, INC., fifty seven percent of Internet users use search engines to search the Internet every day, making on-line searching the second most popular Internet activity (after e-mail). Further, search engine listings outscore banner and title ads by more than two to one on measures including awareness, likelihood to click-on, and overall opinion, in a recent survey by NPD GROUP. The survey also concludes that consumers are five times more likely to purchase products from web sites discovered in a search than by selecting web site banner advertisements. Thus, listing web sites with search engines remains a critical way for proprietors of web sites to ensure a successful implementation. The ability to be listed in search results and ranked at or near the top of a list is believed to be no accident; careful planning and execution are required for a web site to be effectively listed.

A typical search engine functions to maintain a database of web sites that is referenced whenever a search request is submitted by a user. For example, after a person establishes a communication session with the search engine (i.e., "visits" the search engine), the person submits search terms (also referred to herein as "key terms") in a graphical screen control, such as a textbox, and the database is queried to retrieve listings that correspond to the key term(s). The listings typically include hyperlinks to the web sites in the list, and by selecting one of the hyperlinks, the user is directed to the corresponding web site.

Thus, people use prior art search engine technology to sift through billions of Internet web pages in order to locate content that may be provided on only a small fraction thereof.

In a typical case, an Internet web site comprises a collection of electronic files, including, for example, documents, images, sound files and programming code, referred to herein as web site "pages" which provide content via the hypertext mark up language ("HTML"). One web site page in particular, the so-called "home page" of a web site, typically includes hyperlinks to related web site pages that are often stored in file directories relative to the home page. For example, the home page, www.tools.com links to a page illustrating power drills out the location, www.tools.com/powertools/drills.htm. The pages that are linked to the home page often include hyperlinks back to the home page, thereby connecting a series of web site pages to provide the web site.

Currently, there are relatively few varieties of prior art search engines available on the Internet. One kind, the so-called crawler-based engine, automatically visits Internet web sites and stores information in a database regarding the web sites visited. For example, the engine visits an Internet web site, and "spider" software electronically "crawls" through web site pages that are linked to the web site home page, for example, by automatically selecting hyperlinks on the home page. By "crawling" through related web site pages, updates and changes made to various web sites pages are discovered and the database is maintained with relatively current information.

Another kind of search engine, sometimes referred to as a "human-powered" search engine, includes a database of Internet web sites that is maintained by people who make web site-related entries in the database. Human-powered search engines are believed to offer an advantage over crawler-based engines because web sites are actually reviewed by a person who is then able to categorize the web sites accurately. When a user makes a search for content, for example, via a key term search, the search results retrieved by the human-powered search engine are presumably more accurate and useful than search results provided by a crawler-based engine, described above. Unfortunately, and unlike crawler-based engines, however, maintaining human-powered search engines is very time consuming and can preclude making frequent updates to the database to remove obsolete information.

A third kind of prior art search engine comprises a hybrid of human-powered functionality and crawler-based functionality. For example, spider software discovers a web site and makes an entry in a database. However, the spider may not categorize or index the entry automatically. Instead, a human reviews the web site (or a representation thereof, such as a JPEG image file of the web site) and categorizes the site accordingly. Thus, the features of both kinds of prior art search engines are synthesized into a sort of hybrid model that utilizes the benefits of each.

Over time, search engines have provided sophisticated services. For example, many well-known search engines, such as www.google.com, www.yahoo.com, www.findwhat.com or the like, employ various business models which increase a web site's chances that it will be listed in response to a search request submitted by a user. In one prior art scenario, a search engine collects bids from web sites that compete to be listed by the search engine. A proprietor of a first web site who wishes to be listed by a search engine in response to a key term search submits a monetary (e.g., $5.00) bid with the search engine. Proprietors of competing web sites also submits bids and the bids are submitted whenever a user searches for web site related to a key term term, such as the term, "information." The web site proprietors bid to be ranked in a favorable position at or near the top of a list of web sites provided by the search engine. Accordingly, the competing proprietors may bid higher amounts (e.g., $7.50) in order to be better ranked or listed in response to the key term search. Typically, the highest bidders are listed with the best ranking.

Search engines employ another business model, referred to in the industry as the pay-per-click or cost-per-click ("CPC") model. In this model, search engines generate revenue by charging a small fee (e.g., 25¢) when any Internet web site is listed by the search engine in response to a key term search and the searcher selects the hyperlink to the web site in the list. Accordingly, a proprietor of a web site pays the search engine fee when a user of the search engine selects a hyperlink to the proprietor's web site from the search engine listing.

In the prior art, a proprietor of web site submits descriptive information regarding his web site to a search engine. The search engine stores the information in a database and uses it to list the web site in response to a search for content. Search engines, on average, receive thousands of submissions every day, so it may be two to three months before a web site is actually listed by a search engine. Further, there is no guarantee that a web site will be prominently ranked. It is believed by the inventor that in order to be effectively listed, proprietors of web sites should make several submissions during the course of a year to each of a plurality of search engines to ensure the search engine maintains current and accurate information, and that the web site can be discovered by users seeking content over the Internet.

Proprietors of Internet web sites use various known techniques to customize Internet web pages in order to increase the likelihood of being listed by a search engine. For example, proprietors strategically place content on a web page, add meta tags, textual descriptions of images (e.g., via the ALT tag) and various information content that is relevant to the tags, images and subject matter of the site. Such activity optimizes web sites to be effectively represented by search engines. For example, search engines reference the web page title, description and various HTML tags to gather web site information. The description tag provides the engine with a synopsis of a web site. The key terms tag provides terms for a search engine to associate with the web site. Furthermore, search engines often assign greater value and importance to the text located at the top of a page than to the text located in the middle or at the bottom of a page. Thus, the position of content in a web site page can affect the ranking of the site by a search engine.

Search engines use information in meta tags in conjunction with the information content in the web page (i.e., the HTML body) to calculate measurements of key term ratios. A high ratio of key terms present in meta tags to key terms present in the HTML body is believed to improve the ranking of the web site by a search engine with respect to those key terms. For example, a web site that offers gift baskets as a product offering but uses key terms in their content and meta tags like "presents," "Christmas," "holidays," "discounts," "teddy bears," etc. will have a difficult time obtaining good quality ranking because the use of "gifts," "baskets," "gift baskets," etc. does not effectively represent the product offering.

In the prior art, proprietors of Internet web sites are typically notified of their web sites' placement and performance in search engines via e-mail correspondence. For example, search engine optimization ("SEO") information and search engine marketing ("SEM") information, including communication with proprietors regarding the proprietors' web site design and paid search accounts, is typically provided via e-mail. SEO information regards the degree in which a web site is optimized to comply with search engine technology and be well-ranked by a search engine. SEM information regards the degree in which a web site is introduced and submitted to a search engine. Typically, after e-mail notifications are received from a search engine, proprietors "log in" via a search engine user interface and receive electronic reports regarding web site listings and how web site marketing campaigns are performing.

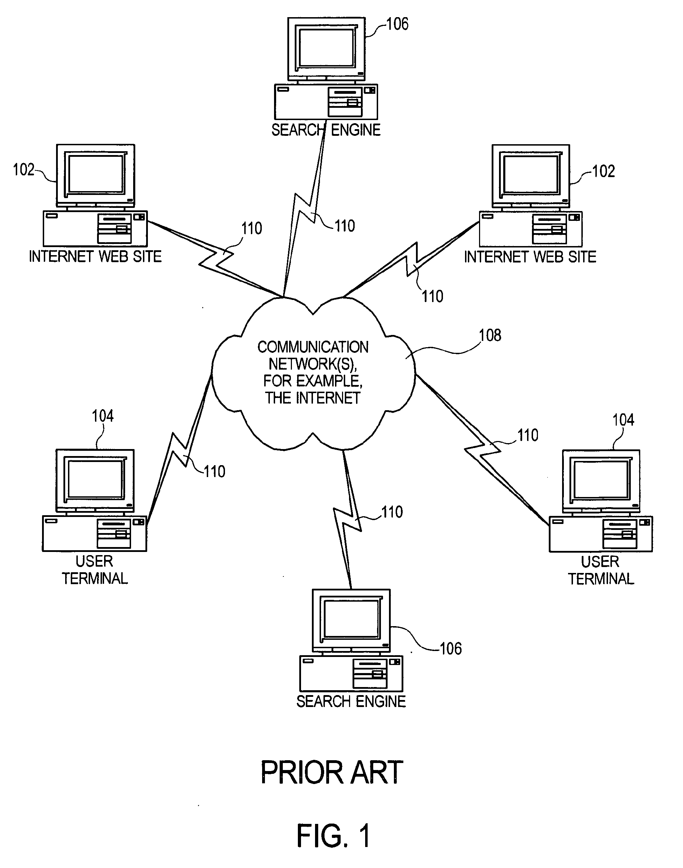

Referring now to the drawing figures in which like reference numerals refer to like elements, there is shown in Fig. 1 a prior art arrangement of devices communicating over a communication network. As shown in Fig. 1, Internet web site servers 102 provide content that is available for user terminal 104. Internet web site 102 preferably are listed by search engines 106 in order for user terminals 104 to locate the content provided on Internet web site servers 102. Search engines 106 preferably provide uniform resource locator ("URL") listings in response to key word or other kinds of searches provided by users. As used herein, reference to a listing of web sites by a search engine, or similar usage, refers, generally, to providing one or more hyperlinks, including a uniform resource locator, to an Internet web site server 102. Of course, one skilled in the art will recognize that search engine 106 may operate as Internet web site server 102 and be listed by other search engines 106. In an embodiment, devices 102, 104 and 106 communicate using the hypertext transfer protocol ("HTTP") over communication network 108, such as the Internet. Communication pathways 110 preferably include packets of information transmitted between the respective devices.

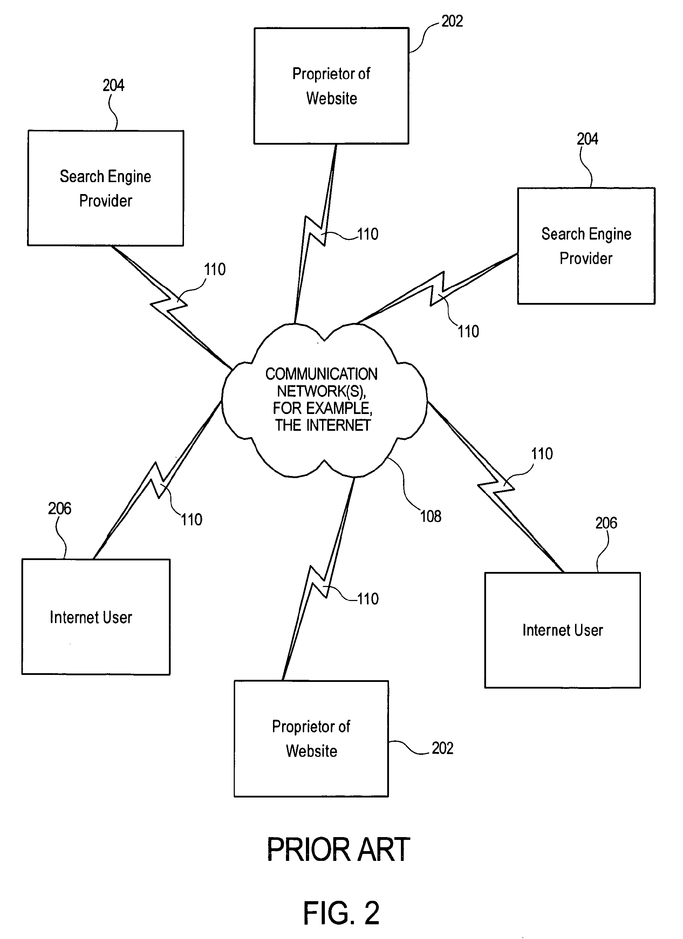

Fig. 2 shows a prior art arrangement of parties operating or managing the devices displayed in Fig. 1. As shown in Fig. 2, proprietor of web site 202 communicates over communication network 108 to provide content.

As used herein, a "proprietor of a web site" or "proprietor" refers, generally, to an owner of an Internet web site, a person authorized with directing or exercising control over any appearance, content and/or features provided in a web site, a person authorized to post content on the web site, or any party acting on behalf thereof. Thus, as used herein, a proprietor can include any party acting in an agent or representative capacity for one who is authorized to control a web site. As one skilled in the art will recognize, a proprietor does not have to be in physical proximity with the device in order to exercise control over it.

Search engine provider 204 operates a search engine for listing Internet web site servers 102 in response to key word or other types of searches from users 206. Search engine provider 204 may offer various business models for proprietor 202. For example, search engine provider 204 establishes an account for proprietor 202 for a pay-per-click or auction type business arrangement (described in greater detail below). Alternatively or in addition, search engine provider 204 receives information regarding web site server 102 and stores the information in a database to list web sites provided by servers 102 in response to a search by user 206. As noted above with respect to Fig. 1, transmission lines 110 include packets of information that are transmitted between the various parties and over communication network 108.

It is believed that prior art methods which proprietors of web sites use to submit information to and communicate with search engines is very cumbersome and time consuming. For example, proprietors of web sites who are trying to maximize placement on a listing provided by search engines through paid and non-paid (so called "organic" or "natural") search engine placement require information and feedback regarding their web site listings. Typically, information provided by a search engine to a proprietor via e-mail is very minimal and the proprietor invests additional time and effort in order to log in to search engines and research search engine information issues to a greater degree.

Thus, effective search engine placement listing is necessary for a web site to be prominently represented, and, accordingly, found by Internet users. Unfortunately, information regarding search engine performance and the frequency and quality of search engine ranking is difficult to obtain in the prior art, making it increasingly difficult for a proprietor of a web site to ensure that his web site is well represented and prominently listed by a plurality of search engines.

### SUMMARY OF THE INVENTION

The preset invention solves the above-described problems associated with prior art search engines, and provides a robust software application that connects proprietors of web sites and search engines in order to provide a constant, informative and secure flow of communication therebetween.

In an embodiment of the present invention, a software application is configured to remain active (i.e., the software is resident) on a user's "local" computer system. More particularly, the software is preferably downloaded and installed on local computers, and thereafter automatically establishes communication sessions between the local computer systems and a server computer system at a remote location. Thus, computers properly configured with the present invention communicate with servers that monitor and control SEO, SEM and search engine account information. The software application preferably provides proprietors with SEO, SEM and search engine portal information with notices that are directly sent to their computers.

Thus, the present invention is preferably deployed in the SEO, SEM and Search Engine markets and enables proprietors of web sites to have a much higher form of control over respective ranking in a search engine listing than was previously available in the prior art. Further, a proprietor's involvement with day to day monitoring of search engine accounts are improved, while the amount of time previously required to monitor the account is reduced. For example, a proprietor of a web site need only spend time on the account when there is an issue or an indication that an alteration or change to an account is warranted. In accordance with the present invention, the proprietor no longer needs to spend time going back to each particular search engine with which the web site is associated, logging in to the search engine and, thereafter, determining how well the web site is performing. Instead, and in accordance with the present invention, the information is transmitted from a search engine to a server computer system, and the server computer transmits the information to proprietors via the desktop software application.

Thus, the present invention delivers search engine-related information, including organic search, paid inclusion search, bid for placement search, and website optimization information to proprietors of web sites in order to offer proprietors a way to monitor aspects of promoting their web sites with search engines. More particularly, the present invention preferably informs proprietors of key terms that are associated with the proprietors' web sites in search engines. Further, the present invention informs proprietors of the respective position in a search results list that the proprietors' web sites for each key term associated the proprietors' web sites. Also, the present invention preferably informs proprietors of the daily, weekly, and monthly number of web site visitors who have been provided a hyperlink to the proprietor's page; i.e., the number of impressions, from a list of search results. The present invention preferably informs proprietors of the number of impressions each key term has received on a daily, weekly, and monthly basis.

In accordance with another aspect, the present invention preferably informs proprietors of the number of times a web site is listed by a search engine (e.g., "impressions") or selected by a user (e.g., "click-through") for each key term has received on a daily, weekly, monthly basis with respect to paid placement (e.g., CPC) also known as bid for placement search. Further, the present invention preferably informs proprietors when a web site is listed in a less desirable (i.e., lower) placement, for example, by being out-bid by a competitor for the same key term. Moreover, the present invention preferably informs proprietors when a web site has gained placement, for example, by a competitor retracting or lowering a bid for the proprietor's key term.

Also, in an embodiment the invention informs a proprietor of a web site when an account with a search engine is (or will be) charged a fee to prevent being de-listed by a particular search engine. Further, with respect to paid inclusion searches, proprietors are preferably informed of costs associated with being listed by a search engine at a particular time. The present invention preferably monitors a proprietor's account status with one or more search engines and notifies a proprietor of placement information when an account with a search engine is low on funds, thereby threatening the placement of the proprietor's web site in a search listing unless funds are replenished. In accordance with another feature of the present invention, proprietors are informed of their current bid prices for each key term term.

Yet another aspect of the present invention is to provide specific information related to web site optimization to inform a proprietor of a web site effective ways to edit a web site to improve the site's relative search engine rank. For example, the invention identifies the search engines that are listing a proprietor's web site, the language and type of web site submission to search engines, and whether certain portions of a web site, such as a particular of directory, were accepted and/or indexed by search engines.

In one embodiment of the present invention, information pertaining to search engine optimization and search engine paid inclusion is transmitted to a proprietor of a web site via text or multimedia messages sent to the proprietor's mobile device(s).

Other features and advantages of the present invention will become apparent from the following description of the invention that refers to the accompanying drawings.

### BRIEF DESCRIPTION OF THE DRAWING(S)

For the purpose of illustrating the invention, there is shown in the drawings a form which is presently preferred, it being understood, however, that the invention is not limited to the precise arrangements and instrumentalities shown. The features and advantages of the present invention will become apparent from the following description of the invention that refers to the accompanying drawings, in which:

Fig. 1 illustrates prior art arrangement of parties and devices communicating over a communication network;

Fig. 2 shows a prior art arrangement of parties operating or managing the devices displayed in Fig. 1;

Fig. 3 illustrates an example arrangement of devices in accordance with an embodiment of the present invention;

Fig. 4 shows an arrangement of parties operating or managing the devices in accord for an embodiment of the present invention;

Fig. 5 illustrates functional elements of an information processor;

Figs. 6A-6I illustrate example display screens provided by the desktop application tool in accordance with an example embodiment of the present invention;

Figs. 7A-70 illustrate example display screens that are used by web site proprietors to modify or edit a web site in order to improve the web site's ranking by a search engine;

Figs. 8A and 8B are flow charts illustrating steps associated with optimizing a web site in accordance with the present invention;

Fig. 9 is an example display screen that illustrates an alert that is provided to a proprietor of a web site after the proprietor is out-bid on a search term by a competitor;

Fig. 10 illustrates an example arrangement of devices in accordance with an alternative embodiment of the present invention; and

Fig. 11 shows a flow chart that illustrates steps associated with an alternative embodiment of the present invention.

### DETAILED DESCRIPTION OF EMBODIMENTS OF THE INVENTION

In one embodiment of the present invention, information pertaining to search engine optimization and search engine paid inclusion is transmitted to a proprietor of a web site via a web-based communication service that includes a software application installed on local computer system and a remote server computer.

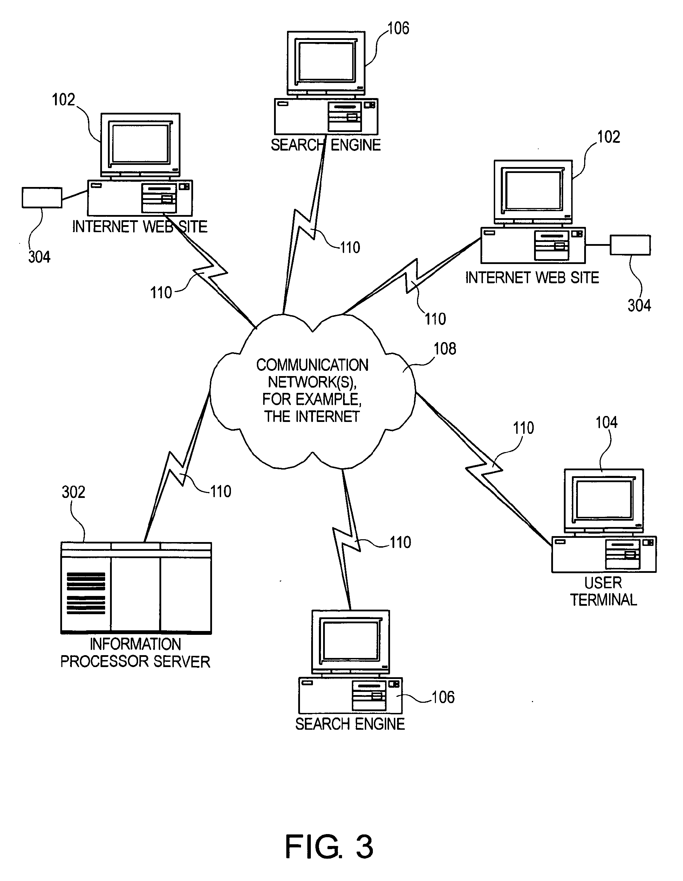

Fig. 3 illustrates an example arrangement of devices in accordance with an embodiment of the present invention and referred herein, generally, as system 100. As shown in Fig. 3, Internet web site server 102, user terminal 104, search engine 106 are represented. In addition, information processor server 302 is represented.

Further, desktop application tool 304, preferably configured as a module operable with an internet web site server and configured to interface with Internet web site server 102 and information processor server 302. Functionality provided by information processor server 302 and desktop application tool 304 is provided in greater detail below.

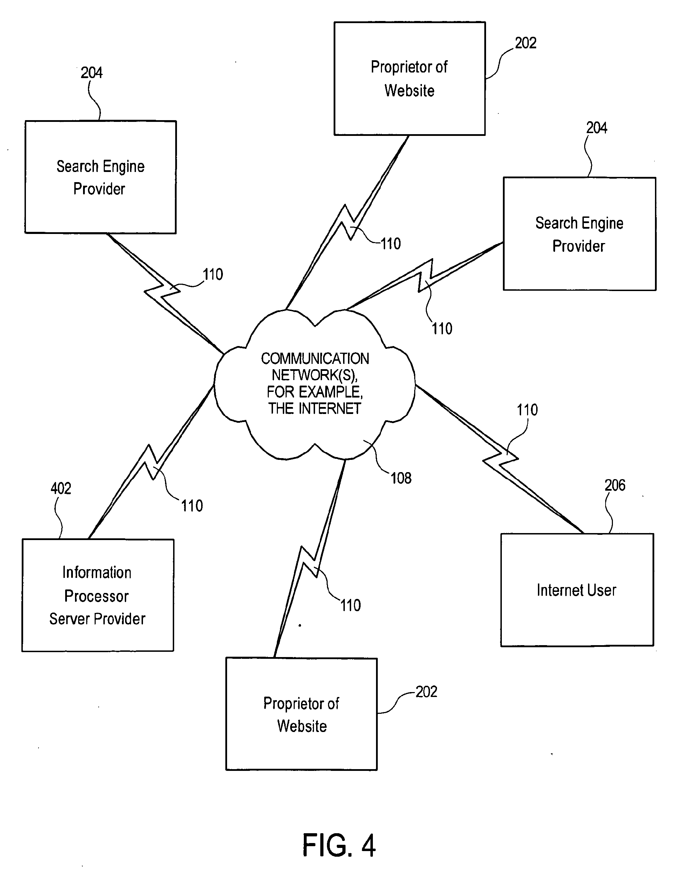

Fig. 4 shows an arrangement of parties operating or managing the devices in accordance with an embodiment of the present invention. The parties illustrated in Fig. 4 are the same as illustrated in Fig. 2, with the addition of information processor server provider 402. The information processor server provider 402 manages and/or operates information processor server 302 in order to provide many of the services described herein. In an embodiment present invention, information processor server provider 402 establishes business relationships with proprietor 202 and search engine provider 204. For example, after proprietor 202 submits information to information processor server provider 402 regarding a respective internet web site server 102, information processor server provider 402 preferably establishes a relationship with a search engine to make submissions, and/or to create and/or manage accounts on behalf of proprietor 202 and search engine provider 204.

Preferably, information processor server provider 402 functions as a sort of intermediary between proprietors 202 and search engine providers 204. Information processor server provider 402 preferably establishes accounts for proprietors 202. Payment is received from proprietors 202 by server provider 402, and used to make payments into accounts held by search engines 106. Thus, for example, when a proprietor 202 wishes to increase a bid for placement, he notifies information processor server provider 402, and provider 402 uses a portion of the capital in the proprietor's account to pay search engine 106. Preferably, information processor server provider 402 charges a fee to proprietor 202 for services provided provider 402.

In an embodiment of the present invention, proprietor 202 is given access to information processor server 302 as well as desktop application tool 304. Once desktop application tool 304 is installed and configured, proprietor 202 preferably stores in application tool 304 account information, such as his user name and password for authorized access to server 302. Once this basic information is provided, desktop application tool 304 receives information from information processor server 302, such as regarding proprietor's 202 accounts with various search engines. Once the available information has been transmitted from information processor server 302, proprietor 202 has access to information, typically formatted as reports, substantially as described below. Preferably, each report relates to a single URL and proprietor 202 selects a specific URL for analysis. When proprietor 202 pauses from working with desktop application tool 304, he preferably minimizes application tool 304 to the task tray (or other similar area provided by a respective operating system) such that desktop application tool 203 remains effectively resident in memory. In this way, desktop application tool 304 requests information from information processor server 302 on a regular basis, and alerts proprietor 202 (e.g., via pop-up display screen(s)) when new information becomes available or alerts are provided.

For example, a proprietor 202 may decide to place a bid with search engine provider 204 for the key word, "submit." The proprietor 202 informs information processor server provider 402 that he is willing to bid two dollars for a favorable ranking by search engine 106. In one embodiment of the present invention, a financial account is established by the information processor server provider 402 on behalf of proprietor 202 and payments to search engine provider 204 are made by the information processor server provider. Information is electronically transmitted to processor 102 to alert proprietor 202, e.g., via a pop-up display screen provided near the WINDOWS TASK TRAY, that a competitor has outbid proprietor 202 on a search engine 106, and, accordingly, proprietor's 202 web site has dropped in rank on the search engine. Thereafter, proprietor 202 may elect to increase the amount of his bid to increase the likelihood of a more favorable ranking. Accordingly, proprietor 202 transmits electronic payment to information processor server provider 402 and information processor server provider 402 pays search engine provider 204.

In an alternative embodiment, information processor server provider 402 enables communication to be established between proprietor 202 and search engine provider 204 via the present invention. For example, the desktop application tool 304 operates to receive information and alert proprietor 202 that proprietor 202 has been outbid by a competitor, for example, for the keyword, "submit." Accordingly, proprietor 202 notifies information processor server provider 402 that he wishes to increase the amount of his bid for the keyword submit. Thereafter, the present invention preferably establishes a communication session (i.e. directs the proprietor's 202 internet application software) to search engine provider 204 to effect the change in the bid.

Thus, the present invention preferably enables the parties to electronically maintain business relationships such as by providing a convenient and efficient transfer of capital and information to improve search engine ranking and listings.

In an embodiment, desktop application tool 304 electronically transmits requests for information stored in a central relational database resident on information processor server 302. Desktop application tool 304 provides links back to information processor server 302 to effect changes to various kinds of information.

For example, the present invention electronically notifies proprietor 202 that proprietor 202 has been out-bid on a search engine for the keyword, "scuba," by a competitor, proprietor 202 uses desktop application tool 304 to communicate electronically with information processor server 302 and change the bid amount. In accordance with the present invention, proprietor 202 selects a hyperlink "Change Account Information" provided by desktop tool 304 and a Internet web browser software application automatically opens and directs proprietor 202 to information processor server 302 and/or and an interface to change the respective bid.

In an embodiment, desktop application tool 304 provides alerts and various data reports to proprietor 102, either on-demand or at various scheduled times. For example, proprietor 202 requests near real time access to a central web server without having submit to a user name and password, or otherwise "log in." In an embodiment, desktop application tool 304 remains active and, for example, resides "minimized" in the WINDOWS task tray, staying out of the proprietor's 202 way until an alert comes in or the user activates the application by double clicking on the task tray icon. Desktop application tool 304 periodically checks automatically for new report or alert data at set intervals.

Desktop application tool 304 preferably makes extensive use of an electronic alert to notify proprietor 202 of various aspects of his/her account (either, for example, with information processor server provider 402 or search engine provider 204). Various events that may indicate an alert include, for example, new SEO and PI reports being made available by information processor server 302, account renewal information, change in the uptime of proprietor's 202 web site (i.e., web site 102 becomes unavailable), and the creation of custom notifications by information processor server provider 402. Proprietors 202 are preferably notified of alerts on an overview display screen of desktop application tool 304, as well as a small window that preferably pops up in the lower right hand corner of a display screen. The pop up window is preferably time-delayed, and only appears for a few moments before disappearing. Preferably, desktop application tool 304 makes a request to an XML gateway (described in greater detail below), to check for new alerts at set intervals. The intervals are preferably defined such that various kinds data that may become obsolete is updated on a more frequent basis than data that are less likely to change.

As illustrated below and with reference to the drawings, one function of desktop application tool 304 includes the generation of reports from data provided by the information processor server 302. These reports are, generally, specific to URL(s) in the proprietor's 202 search engine account. Proprietors 202 may use desktop application tool 304 to optimize multiple URLs in a single account with information processor server provider 402.
Preferably, proprietor 202 selects a URL to work with from a pull down menu that always remains prominent in a display screen provided by desktop application tool 304. Examples of the reports provided by the present invention are discussed below.

Information processor 302 preferably includes all databases necessary to support the present invention. However, it is contemplated that information processor 302 can access any required database via communication network 108 or any other communication network to which information processor 302 may be coupled. Communication network 108 is preferably a global public communication network such as the Internet, but can also be a wide area network (WAN), local area network (LAN), or other network that enables two or more computers to communicate with each other.

In an embodiment, information processor 302 and user terminals 104 are any devices that are capable of sending and receiving data across communication network 108, e.g., mainframe computers, mini computers, personal computers, laptop computers, a personal digital assistants (PDA) and Internet access devices such as Web TV. In addition, information processors 302 and user terminals 104 are preferably equipped with a web browser, such as MICROSOFT INTERNET EXPLORER, NETSCAPE NAVIGATOR, MOZILLA FIREFOX or the like. Information processors 302 and user terminals 104 are coupled to communication network 108 using any known data communication networking technology.

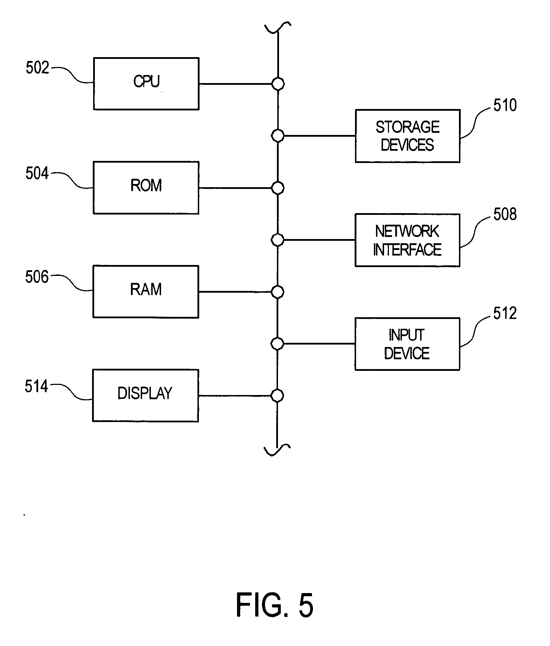

As shown in Fig. 5, the functional elements of each information processor 302 are shown, and include one or more central processing units (CPU) 502 used to execute software code and control the operation of information processor 302, read-only memory (ROM) 504, random access memory (RAM) 506, one or more network interfaces 508 to transmit and receive data to and from other computing devices across a communication network, storage devices 510 such as a hard disk drive, floppy disk drive, tape drive, CD ROM or DVD for storing program code databases and application data, one or more input devices 512 such as a keyboard, mouse, track ball, microphone and the like, and a display 514.

The various components of information processor 302 need not be physically contained within the same chassis or even located in a single location. For example, storage device 510 may be located at a site which is remote from the remaining elements of information processor 302, and may even be connected to CPU 502 across communication network 108 via network interface 508. Information processor 302 preferably includes a memory equipped with sufficient storage to provide the necessary databases, forums, and other community services as well as acting as a web server for communicating hypertext markup language (HTML), Java applets, Active-X control programs or the like to user terminals 104. Information processors 302 are arranged with components, for example, those shown in Fig. 5, suitable for the expected operating environment of information processor 302. The CPU(s) 502, network interface(s) 508 and memory and storage devices are selected to ensure that capacities are arranged to accommodate expected demand.

As used throughout herein, the terms "link" and "hyperlink" refer to a selectable connection from one or more words, pictures or other information objects to others in which the selectable connection is presented within the web browser. The information object can include sound and/or motion video. Selection is typically made by "clicking" on the link using an input device such as a mouse, track ball, touch screen and the like. Of course, one of ordinary skill in the art will appreciate that any method by which an object presented on the screen can be selected is sufficient.

The functional elements of information processor 302, shown in Fig. 5, are of the same categories of functional elements present in user terminals 104. However, not all elements need be present in the user terminals 104. For example, storage devices, in the case of PDA's, and the capacities of the various elements are arranged to accommodate the expected user demand. For example, CPU 502 in user terminal 104 may be a smaller capacity CPU than the CPU present in information processor 302. Similarly, it is likely that the information processor 302 will include storage devices of a much higher capacity than storage devices present in user terminals 104. Of course, one of ordinary skill in the art will understand that the capabilities of the functional elements can be adjusted as needed.

The nature of the invention is such that one skilled in the art of writing computer executable code (i.e., software) can implement the functions described herein using one or more of a combination of popular computer programming languages and developing environments including, but not limited to, C, C++, Visual Basic, JAVA, HTML, XML, ACTIVE SERVER PAGES, JAVA server pages, servlets, and a plurality web site development applications.

Although the present invention is described by way of example herein and in terms of a web-based system using web browsers and a web site server (e.g., information processor 302), system 100 is not limited to such a configuration. It is contemplated that system 100 is arranged such that user terminal 104 communicates with and displays data received from information processor 302 using any known communication and display method, for example, using a non-Internet browser WINDOWS viewer coupled with a local area network protocol such as the Internet Packet Exchange (IPX), dial-up, third-party, private network or a value added network (VAN).

It is further contemplated that any suitable operating system can be used on information processor 302 and user terminal 104, for example, DOS, WINDOWS 3.x, WINDOWS 95, WINDOWS 98, WINDOWS NT, WINDOWS 2000, WINDOWS ME, WINDOWS CE, WINDOWS POCKET PC, WINDOWS XP, MAC OS, UNIX, LINUX, PALM OS, POCKET PC and any other suitable operating system.

As used herein, references to displaying data on information processor 302 and user terminal 104 regard the process of communicating data across communication network 108 and processing the data such that the data are viewed on a display 514, for example by using a web browser and the like. As is common with web browsing software, the display 514 on user terminal 104 presents sites within the system 100 such that a user can proceed from site to site within the system by selecting a desired link.

Therefore, each user's experience with system 100 is based on the order with which he/she progresses through the display screens. Graphic controls are preferably available in the display screens and modules to initiate data processes, and to provide convenient navigation between the display screens and modules of system 100. In other words, because the system is not completely hierarchical in its arrangement of display screens, users can proceed from area to area without the need to "backtrack" through a series of display screens. For that reason, and unless explicitly stated otherwise, the following discussion is not intended to represent any sequential operation steps, but rather to illustrate the components of system 100.

The following is a brief description of at least a partial implementation of an embodiment of the present invention. Although the following contains particular details with respect to implementing the present invention, one skilled in the art will recognize that various architectures are available to implement the present invention across communication network 108. Therefore, the following description is illustrative to teach one skilled in the art how to build an embodiment of the invention, and is not intended to limit or restrict the invention to any one particular implementation or technology.

In an embodiment of the present invention, data are transmitted to desktop application tool 304 via an XML gateway that resides on information processor server 302. Desktop application tool 304 preferably requests the data from the XML gateway before any data are sent by server 302. Preferably, the XML gateway queries a relational database and the results are transmitted to desktop application tool 304. Access to the XML gateway and its associated data is preferably controlled by user name and password. Proprietor's 202 existing access level preferably determines his level of access to desktop application tool 304 reports and alert feeds. Data that are received from the XML gateway are preferably cached locally on the proprietor's computer system. This prevents unnecessary requests for information that has already been requested and transmitted. It also enables the application to be used in "offline" mode (i.e., without being connected to communication network 108). Thus, if proprietor 202 is not connected to the Internet, desktop application tool 304 still functions by displaying information and reports that were previously downloaded.

In an embodiment of the present invention, information processor server 302 makes use of the HTTP protocol to wait for requests from clients. For example, a web server (running Apache) uses the known mod_perl function to process requests. The web server preferably includes a number of CGI scripts that are specific to each report, as well as general account information. In practice, desktop application tool 304 transmits to information processor server 302 a query string, which may be formatted as an XML document. The XML document preferably includes information about the proprietor 202, such as user name and password, as well as information specific to the request. When a request is made, each respective script preferably processes the XML document, queries a database for information, creates a new XML document, and returns it to the proprietor 202 (via desktop application tool 304) in response to the initial HTTP request.

Desktop application tool 304 preferably initiates electronic transactions of data with information processor server 302. For example, desktop application tool 304 preferably makes individual transactions for each requested report type. If desktop application tool 304 requests position tracking and submission information regarding a respective search engine 106, two separate electronic requests to information processor server 302 are made. Further, desktop application tool 304 transmits electronic requests at predetermined time intervals. These intervals may vary depending on which report the desktop application tool 304 is requesting.

Preferably, desktop application tool 304 generates requests via HTTP to information processor server 302, which is running as a HTTP server. Server 302 preferably utilizes different respective CGI scripts for each report, desktop application tool 304 references a particular URL,AND based on the particular report the proprietor wants. In an example embodiment, this information is hard coded in the desktop application tool 304. Desktop application tool 304 preferably generates an XML document prior to making an HTTP request to information processor server 302. This creates a query string with the request. This XML document preferably contains the proprietor's 202 user name and password, as well as information specific to the individual report (e.g., the currently selected URL for analysis, and a date range for the report). This XML document (QUERY STRING) is, thereafter, preferably passed to server 302 via a known command, such as an HTTP POST or GET. Information processor server 302 preferably processes the request and responds to the HTTP response. Desktop application tool 304 preferably processes the reply, handles any error, saves the data to disk (as a way to cache information and allow offline use), and stores the new information in memory for current use. In an embodiment, the query is formatted with an XML tag and a hyperlink, which may comprise a URL having formatted parameters.

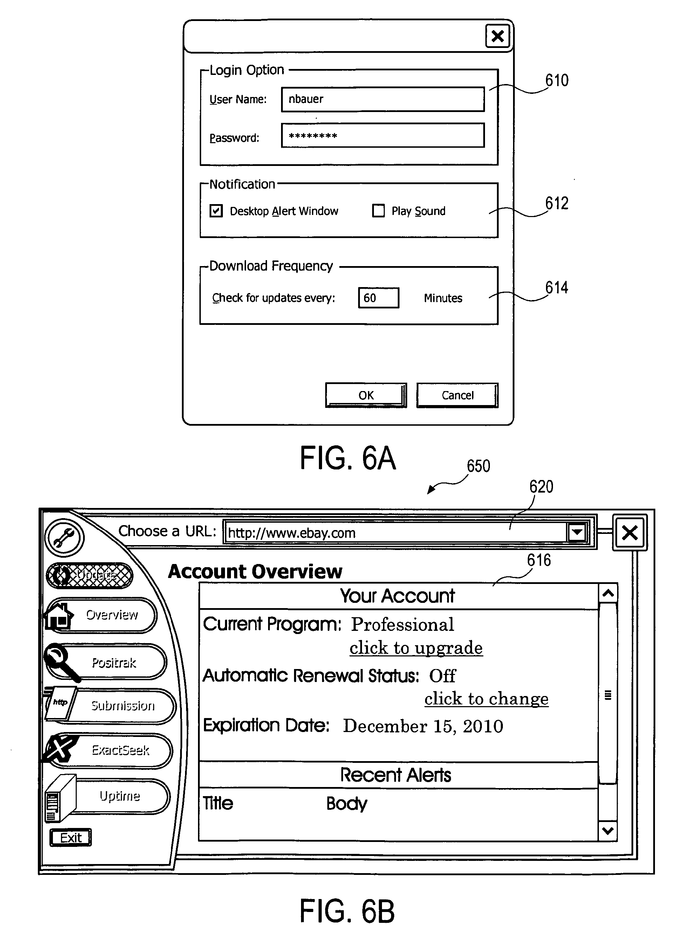

Figs. 6A-6I are example display screens provided by desktop application tool 304 in accordance with an example embodiment of the present invention. As noted above, desktop application tool 304 preferably interfaces with information processor server 302 in order to receive information from server 302 and to receive input from web site 102 and/or proprietor 102.

Fig. 6A illustrates an example account overview display screen 650 that includes login options box 610 which provides controls for a proprietor 202 to enter a user name and/or a password for logging into information processor server 302. In notification section 612 and download frequency section 614, proprietor 202 selects options to invoke a desktop alert window or play a sound in order to be notified of a particular event. Further, the proprietor can adjust the frequency with which information is downloaded from information processor server 302 by adjusting in section 614 an amount of time to check for updates, such as sixty minutes. Thus, desktop application tool 304 comprises controls, such as shown in Fig. 6A, for customization.

Fig. 6B illustrates an example search engine information display screen 652 provided by the desktop application tool 304 that illustrates account overview information for a respective URL. As noted above, proprietors of web sites 202 establishes a business relationship with the provider 402 of information processor server to purchase the services and features described herein. Display screen 650, illustrated in Fig. 6B, represents an example account for the URL www.ebay.com. As shown in Fig. 6B, the account overview section 616 indicates that proprietor 202 has a professional account which entitles the proprietor to various features provided and described herein, with an automatic renewal status option turned off, and an expiration date identified as December of 2010. Further, account overview section 616 includes any recent alerts that may have been issued by information processor server 302. In an embodiment of the present invention, proprietor 202 could select the URL control 620 in order to identify and analyze a different URL.

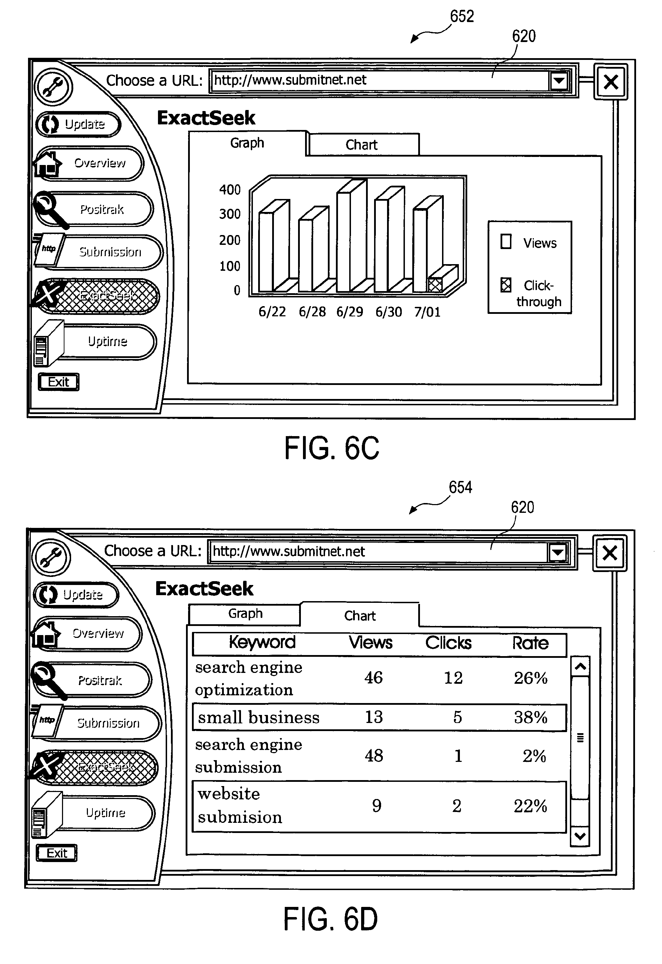

Fig. 6C is an example display screen 652 that provides a graph for a particular URL (e.g., www.submitnet.net) and that shows over the course of five days how well the URL is represented by a particular search engine. In the example shown in Fig. 6C, Exact Seek is the search engine. As indicated in the graph shown in Fig. 6C, a moderate spike in impressions was noted on 6/29.

Fig. 6D illustrates an example display screen 654 that shows a chart that is selected from the display screen shown in Fig. 6C. As shown in Fig. 6D, a table of key words, views, clicks and calculated percentage rates are provided. "Views" represents the number of times URL selected in the URL control 620 was listed by a search engine, "clicks" represents the number of times the URL identified in URL control 620 was selected and "rate" represents a percentage of time the views translated into clicks (the percentage of time a user 104 selected the URL from search engine 106). Thus, the desktop application tool 304 provides a convenient graphic and tabular view of performance with respect to search engine listings for a proprietor 202.

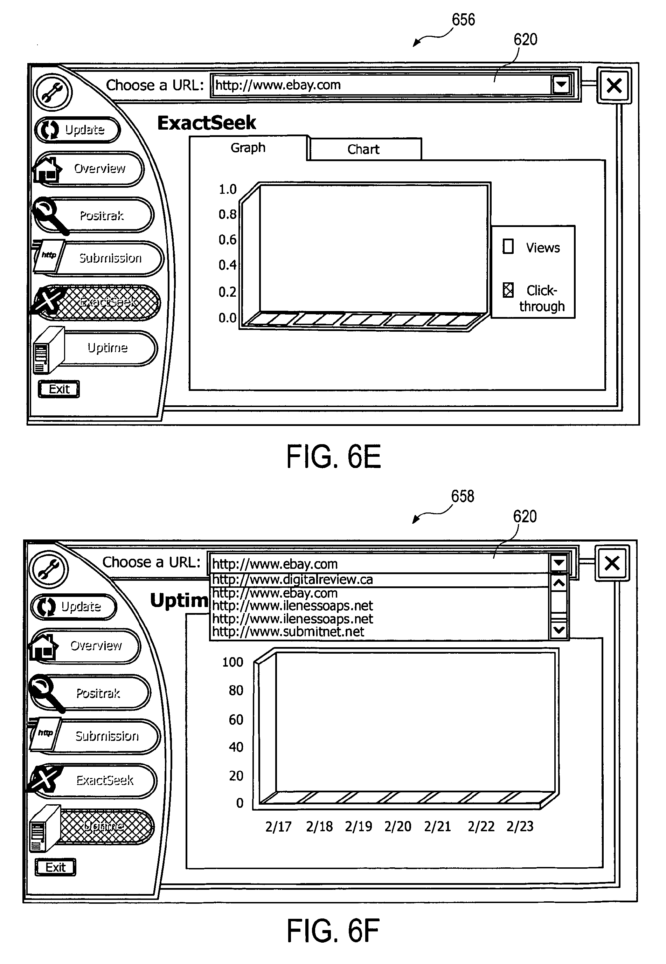

Fig. 6E and Fig. 6F illustrate example display screens 656 and 658 that are provided via desktop application tool 304 and represent the amount of time that a particular web site, identified by URL control 620, was active. Referred to generally in the industry as "up time," the present invention preferably monitors whether a web site is active or inactive. As shown in Fig. 6F, a plurality of URLs are available via a dropdown list for the proprietor's 202 review.

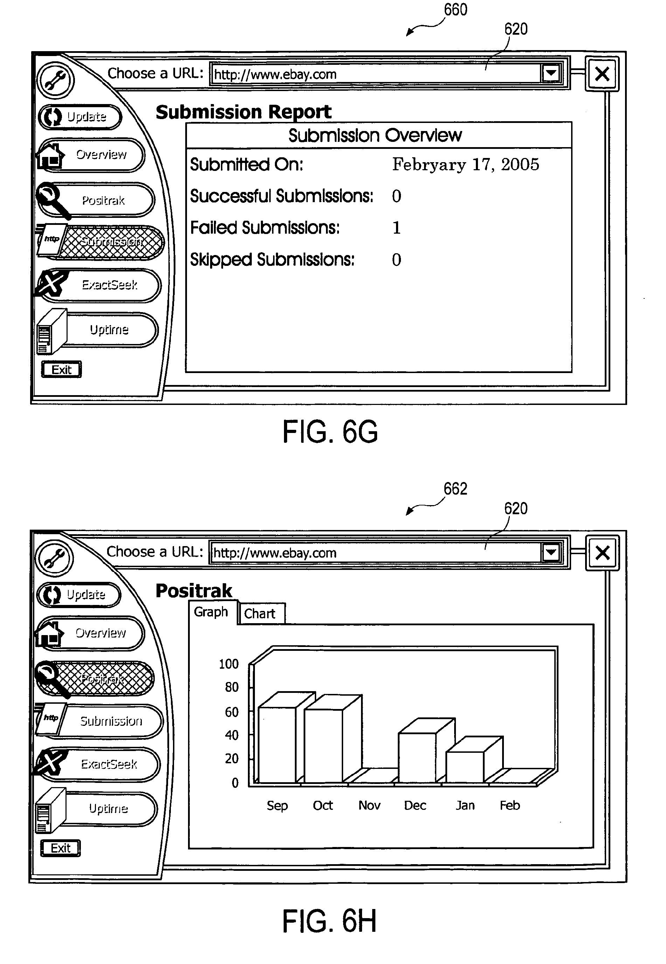

Fig. 6G illustrates a display screen 660 that includes a submission report that is provided to proprietors 202 and represents a date in which a web site URL was submitted to a search engine, a number of successful submissions to the search engine, a number of failed submissions, and a number of skipped submissions. The submission report is helpful to provide feedback to a proprietor 202 in case, as shown in the example display screen 660, a submission was unsuccessful for any reason.

Figs. 6H and 6I are example display screens 662 and 664 provided by desktop application tool 304 that illustrate position tracking information in accordance with the present invention. As shown in Fig. 6H, a graph illustrates the previous six months of calculated key term scores for the URL selected in URL control 620. As described above, POSITRAK represents the placement of a proprietor's 202 web site with respect to specific key words on particular search engines. The results are graphically represented in the graph shown in Fig. 6H. Fig. 6I includes the previous three months of POSITRAK scores and further identified by particular key terms. For example, and as shown in Fig. 6I, the keyword test was shown to score 0 in both December and January while the keyword ebay.com scored a POSITRAK score 85 in December and 55 in January.

The following is brief description of calculating a position tracking score, in accordance with an embodiment of the present invention. The following example is to be construed as one embodiment, and that alternative measures can be used to calculate position tracking, as described herein. For each URL, a score is preferably computed for each key term on each search engine identified in a list. If a keyword has multiple matches on one search engine, the match with the highest score is preferably used. Once a score is computed for every keyword over every search engine, the total is averaged. This results in the overall score. In order to determine a "keyword score," the scores which the keyword received on each search engine are preferably totaled and averaged. In order to determine the search engine score, the score for each keyword with respect to a particular search engine, is totaled and averaged.

For example, in order to compute the score of a keyword the following algorithm is applied:

Page number = the page number in which the keyword was initially found on the search engine. Preferably this number can be no greater than 5.

Page position = Position of the keyword on the page it was found on.

Page_Score = (100 - (page_number * 20))

If Page position <= 5 then Position_Score = 20 - ((page position - 1) * 3) Else Position_Score = 5.

In order to compute the final score for the keyword, the page and position scores are added together. This number should be anywhere from 5-100. If the keyword is not found at all, the score is preferably zero.

Thus, as described above with reference to the example display screens illustrated in Figs. 6A-6I, desktop application tool 304 preferably provides mechanisms for proprietors 202 to manage search engine accounts, and/or accounts held with information server provider 402 and, further, to provide information in various graphical and tabular formats to provide feedback for proprietors 202, with respect to how well a respective web site is ranked by a search engine.

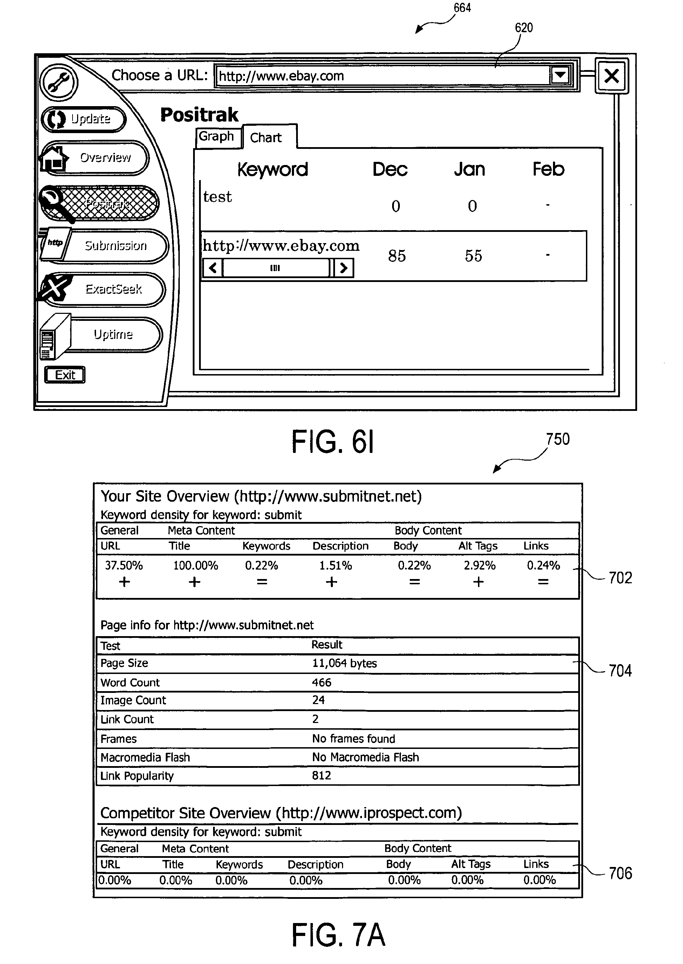

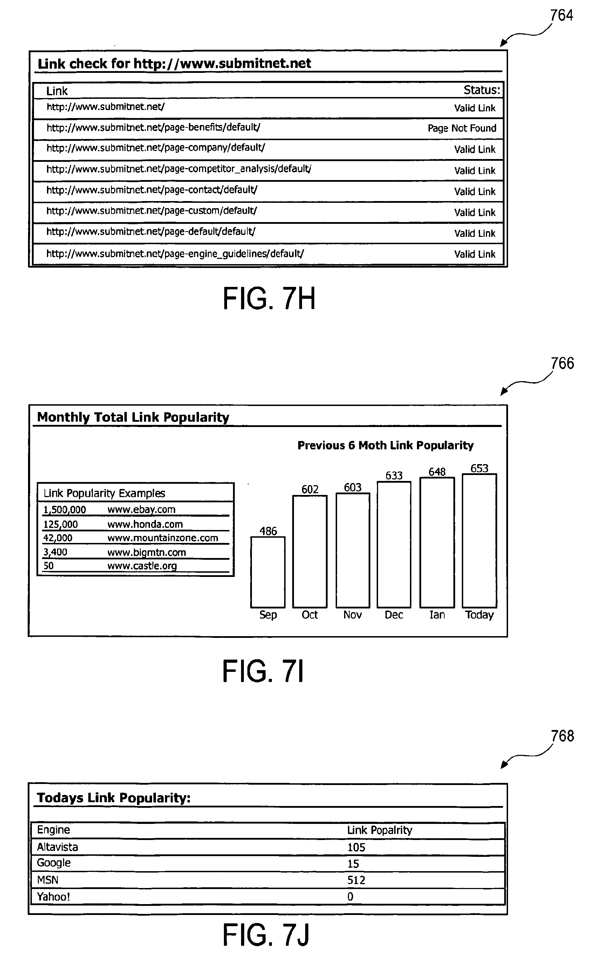

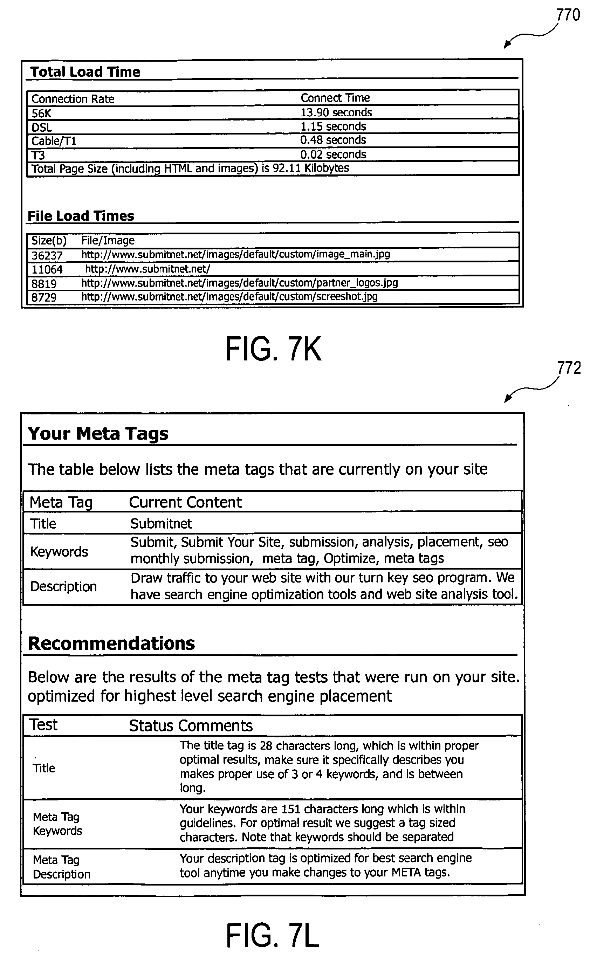

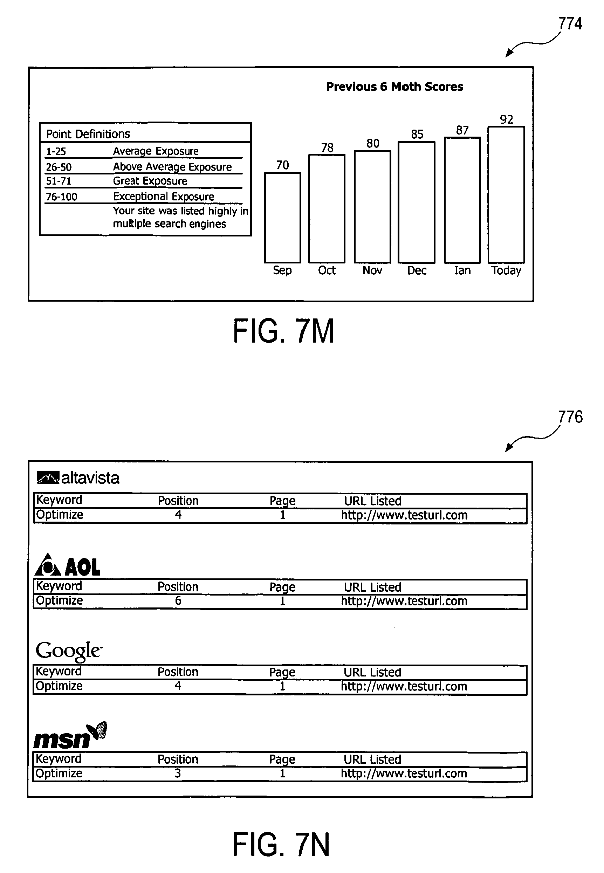

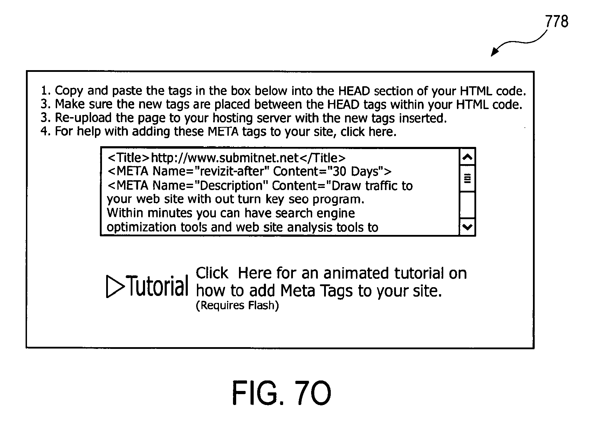

Figs. 7A-7O illustrate example display screens that are used by proprietors 202 to modify or edit a web site 102 in order to improve the web site's 102 ranking by a search engine. The information provided in the example display screen shown in Figs. 7A-7O represent observations and an analysis that is performed by the present invention of the proprietor's 202 web site. For example, the present invention scans the HTML of a particular web site and identifies inconsistencies, syntax errors, broken links or the like. Thus, the present invention provides a useful analytical tool for providing insight to a provider 202 such that modifications can be made to an Internet web site 102 in order to improve the ranking of the web site by search engine 106.

For example Fig. 7A illustrates an example site overview display screen 750 provided by the present invention, which preferably identifies a "keyword density" to establish a percentage of time that a particular keyword or key term is referenced in various parts of the web site 102. For example, for the URL www.submitnet.net (Fig. 7A), the keyword "submit" was present in 37.5% of the URL, 100% of the title, .22% in meta tag keywords, 1.51 % of the description, .22% of the body, 2.92% of the ALT tags and .24% of links. Thus, in general keyword density section 702, proprietor 202 can determine the frequency of a keyword in various parts of the Internet web site 102 and can make changes to Internet web site 102 accordingly. In page info section 704 (Fig. 7A), various kinds of information are provided for a particular URL (www.submitnet.net, in the example shown in Fig. 7A). As shown in Fig. 704, the total size of the page is provided, the number of words, the number of images, number of links and whether frames or macromedia flash files are identified. Further, the link popularity is provided which represents the ranking of the URL in a search engine.

Also shown in Fig. 7A, competitor's site overview section 706 provides a similar keyword density report as shown in section 702, although for a competitor's web site. In the example shown in Fig. 7A, the web site www.iprospect.com is evaluated.

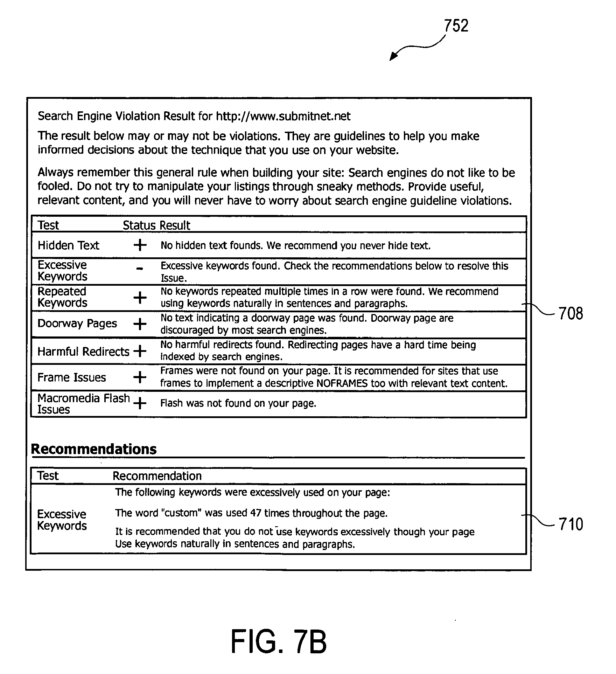

Fig. 7B illustrates an example search engine violation results display screen 752 which shows guidelines and feedback for the design of a web site. For example, and as shown in Fig. 7B, hidden text, excessive number of keywords, repeated keywords, doorway pages, harmful redirects, frame issues and whether or not macromedia flash issues are identified. In the example shown in Fig. 7B, the only search engine violation result that was discovered regards excessive keywords. A summary of the results of tests related to the above potential violations is provided in section 708. Accordingly, in recommendation section 710, the invention recommends that proprietor 202 reduce the number of times the word "custom" is used throughout the page to avoid excessive use of keywords.

Fig. 7C is an example report 754 that identifies incompatible attributes that have been discovered in Internet web site 102. After the present invention reviews Internet web site 102, a list of attributes, identified by a tag and a corresponding attribute, are counted and a variety of web browser software applications are listed with an indication whether the attribute is incompatible with the respective web browser software applications. For example, and as shown in Fig. 7C, the attribute background in the tag "td" occurs five times in the web site and is incompatible with the opera web browser software application or in any browser that supports only HTML version 4.01. Also shown in Fig. 7C, the particular line numbers in which the background attribute for the tag td is discovered are listed for enabling a proprietor 202 to easily edit the HTML in the page.

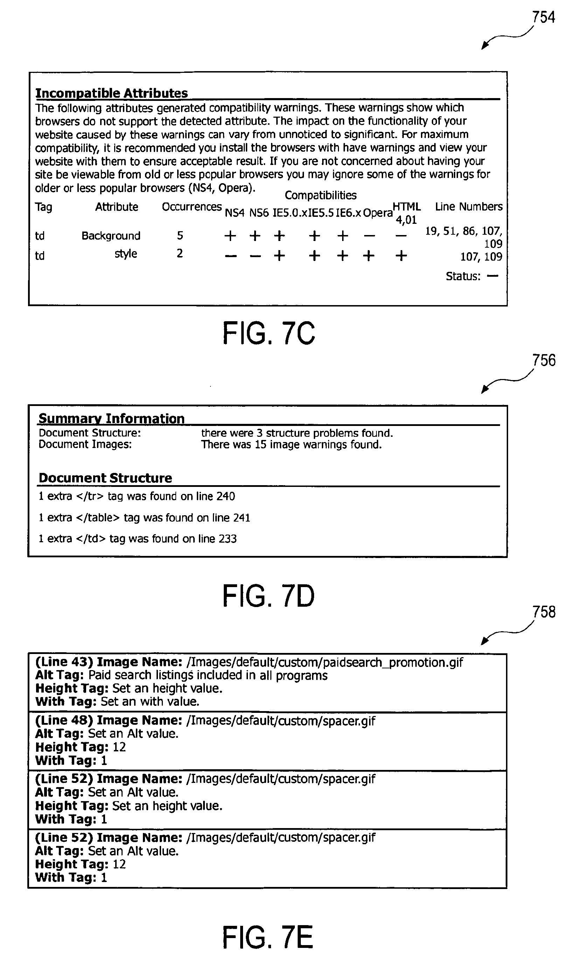

Fig. 7D illustrates an example document structure summary information report 756 that identifies potential syntax errors or other problems in a web site page discovered by the present invention. In the example shown in Fig. 7D, and one extra </tr> tag was found at line 240, one extra </table> tag was found at line 241, and one extra </td> tag was found on line 233. Thus, as shown in Fig. 7D, the present invention provides a convenient way for proprietors 202 to identify structural and/or design problems with an Internet web site page.

Fig. 7E illustrates an example report 758 that identifies potential problems with images that were discovered in accordance with an embodiment of the present invention. As shown in report 758, two image files (page search_promotion.gif) and spacer.gif were discovered to be lacking one or more tags associated with the image. For example, the present invention recommends that the ALT tag, the HEIGHT tag and the WIDTH tag be provided in various contexts. Thus, using the display screen (an example which is shown in Fig. 7E), proprietor 202 can edit the HTML in a web site 102 to provide the tag values recommended by the present invention.

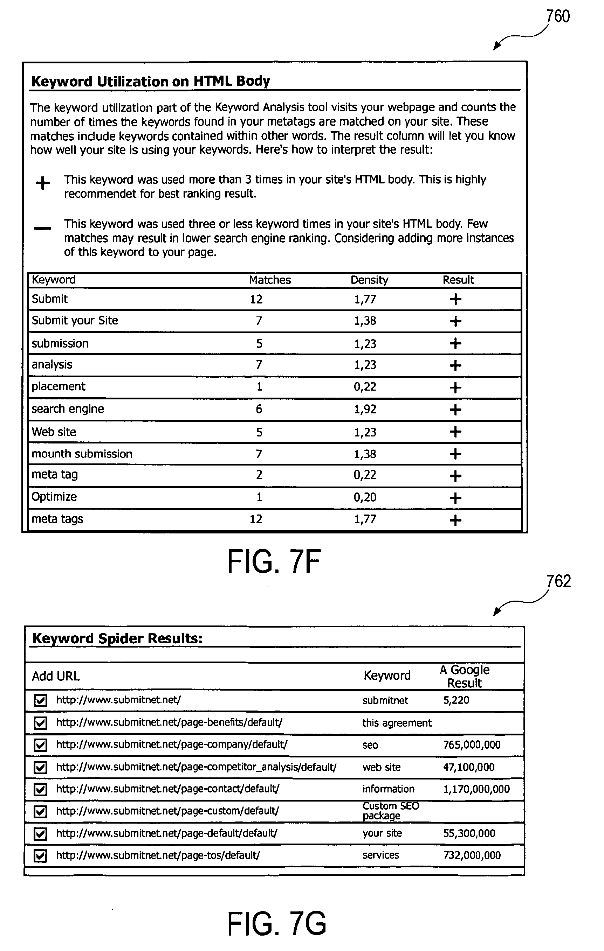

Fig. 7F represents an example keyword utilization report 760 that counts the number of times a keyword placed in meta tags are similarly located in the body of a web site. As described above, the present invention preferably reviews the content of web site 102 and makes determinations based upon an analysis performed thereon. In the example shown in Fig. 7F, a plurality of keywords are identified in a table, and the number of matches for each keyword is listed that identifies the number of times a keyword is included in the web site HTML body. A percentage density is further calculated.

Fig. 7G illustrates an example keyword spider report 762 generated by the present invention regarding keyword spider results. As described above, a spider refers to, generally, a technique employed by search engines to establish communication sessions with web sites for indexing purposes. In the example report 762 shown in Fig. 7G, proprietor 202 is presented a list ofURLs, keywords and a number of search engine results (in the example shown, Google). Further, a check box is provided on each row of the report to enable proprietor 202 to add a URL to a search engine. In the example shown in Fig. 7G, the keyword "submitnet" is discovered by the present invention, for the URL www.submitnet.net, resulted in 5,220 search engine results. The keyword "keyword" is identified in the subdirectory, "page-benefits/default" under the URL www.submitnet.net. Using the keyword spider results report 762, proprietor 202 can make a determination whether to add a URL for submission to a search engine based on an analysis of keyword information, a particular URL, and the number of results for a given search engine.

Fig. 7H illustrates an example link check report 764 that identifies whether links provided in a particular web site 102 have potential problems. For example, a hyperlink that is included in a web page that points to a page that does not exist is identified in the link check report and brought to the attention of proprietor 202. In the example shown in Fig. 7H, "void links" and "page not found" errors are identified with respect to particular links under the URL, "www.submitnet.net." The link check report 764 is a useful mechanism to inform proprietors 202 of errors in hyperlinks thereby enabling provider 202 to make corrections to web site 102.

Fig. 71 illustrates an example monthly total popularity report 766 provided by the person mentioned. As used herein, link popularity refers, generally, to the number of web site pages containing links to a given web site. As shown in Fig. 7I, the previous six months represented in the form of a bar chart identifies the popularity of a particular hyperlink. Also shown in Fig. 7I, a link popularity examples section identifies the most popular link (shown as ebay.com with 1,500,000 links) and least popular (www.castle.org with 50 links). Thus, 1,500,000 web sites include links to www.ebay.com, while only 50 web sites have links to www.castle.org. By providing a table showing link popularity, e.g., the monthly total link popularity report, best shown in Fig. 71, a point of reference for proprietors to determine how well a website is performing in a search engine.

Fig 7J is an example report 768 identifying link popularity by search engine for a single day. As shown in the example report in Fig. 7J, the MSN search engine provides the highest link popularity, while www.yahoo.com provides the lowest link popularity.

Fig.7K illustrates an example report 770 that indicates how well a particular website 102 is displayed in various web site browser applications in various contexts. For example, the total amount of time required for a website to be displayed is shown, and respective file sizes are identified in the report. In the example shown in Fig. 7K, a user terminal 104 requires 13.9 seconds to display the website 102 using a connection rate of 56K bps. However, a user terminal 104 connecting by cable model/T1 line, the website is displayed in .48 seconds. The present invention displays a variety of times for displaying the website 102 for plurality of connection types that may be used by user terminals 104. Further, as shown in Fig. 7K, plurality of image files are listed with a respective size (in bytes). Thus, proprietor 202 can use the information as displayed in the example report in Fig. 7K to determine whether adjustments may be required for catering to users who are accessing the website 102 using a slower connection or whether to adjust the size of file to improve website performance.

Fig. 7L illustrates an example meta tag report 772 regarding meta tags that are discovered in a website by the present invention. In the example report shown in Fig. 7L, two tables are provided; one lists the meta tags that are on the site, and the second provides recommendations for optimizing the internet website 102. By reviewing the content of the meta tags (in the first table) and the recommendations provided by the present invention (in the second table), proprietor 102 can edit meta tags placed in the website in order to optimize the web page for improved placement and ranking by search engines. Thus, by reviewing the tags and recommendations provided by the present invention, for example as shown in Fig. 7L, proprietors 202 can improve search engine ranking of web sites.

Fig 7M illustrates an example six month point score report 774 that includes a bar chart that identifies for the previous six months the degree of exposure a website has in a search engine. An example shown in Fig 7M, the exposure of the internet website 102 has steadily improved over time from a score of 70 (which represents great exposure) in September to a score of 92 (represents the exceptional exposure and listed highly in multiple search engines) in February. Thus, proprietors 202 can review the report, an example which is displayed in Fig 7M to determine quickly whether a particular website 102 is improving with respect to its exposure.

Fig 7N represents a position check report 776 in accordance with an embodiment of the present invention period as shown in Fig. 7N, four search engines, AltaVista, AOL, Google and MSN are identified and the position number and page number on the search engine for a given URL is shown in response to a keyword search. For example, the URL www.testurl.com was ranked in the fourth position in response to a search using the keyword optimize by AltaVista. AOL ranked the same URL at position 6, Google ranked the same URL at position 4, and MSN ranked the same URL at position 3. Thus, using the position check report 776, an example of which is shown in Fig. 7N, proprietor 202 can determine the relative ranked position for a URL in response to a search for a given key term by a plurality of search engines. This enables proprietor 202 to modify submissions to a particular search engine that may not rank a respective URL in a particularly high position.

Fig. 70 illustrates an example html generation display screen 778 that provides for automatic generation of HTML code by the present invention that is provided to proprietor 202 for placement in the proprietor's website 102. In the example shown in Fig. 70, a series of tags is automatically generated and proprietor 202 is recommended to copy and paste the tags into the HEAD section of the HTML code of the website 102. In an embodiment, the various tags provided by the present invention serve to improve the ranking of the website 102 by particular search engines.

Thus, as displayed in Fig. 7A to 70, proprietors can use reports generated by the present invention to edit and modify a website 102 to improve the ranking and positioning of the website in a search engine list.

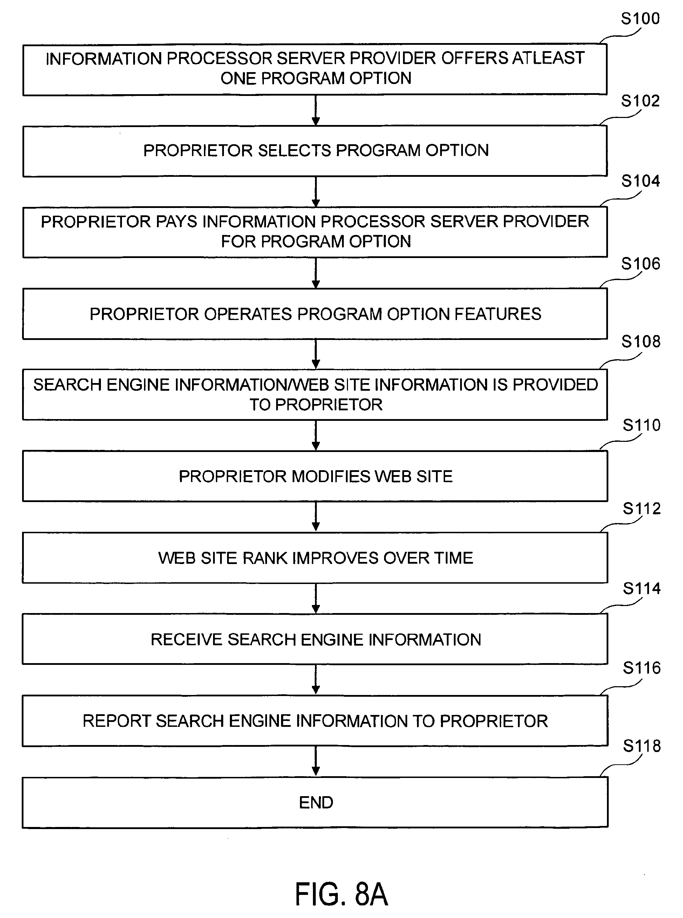

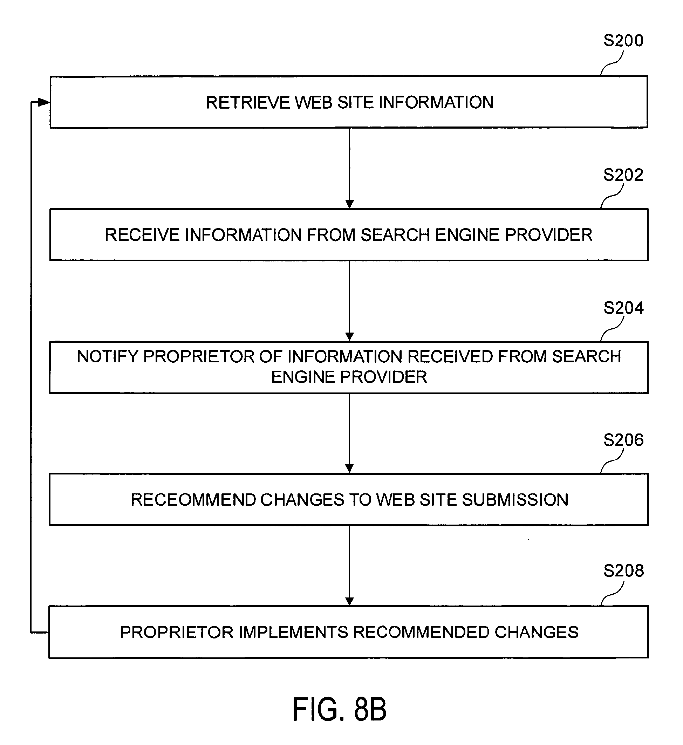

The present invention is now further described with reference to the flow charts shown in Figs. 8A and 8B.

Fig. 8A shows a flow chart that identifies steps associated with optimizing a web site and realizing benefits therefrom in accordance with the present invention. At step S100, information processor server provider 402 makes at least one program option available for proprietors 202. For example, information processor server provider 402 can offer various combinations of features, as described herein, and can offer various fee arrangements with proprietors 202 in return. Proprietor 202 may be particularly interested in being informed of relative rank positions of competitors' ranking with one or more search engines. That same proprietor 202, however, may not be interested in receiving an analysis regarding site load times, browser compatibility, link checks, HTML, or the like. Therefore, in an embodiment of the present invention, proprietor 202 selects at least one program option provided by information processor server provider 402 (step S102). Thereafter, proprietor 202 preferably pays information processor server provider, or enters into a contractual arrangement with information processor server provider 402 for the program option(s) provided thereby (step S104).

In an embodiment, information processor server provider 402 provides an Internet web site that offers various program options and features, as described herein, for sale to proprietors 202. Preferably, proprietors 202 receive desktop application tool 304 when an agreement is reached between proprietors 202 and server provider 402 regarding program options and services. Thereafter, proprietor 202 preferably operates the present invention and avails himself of the various features contracted for with server provider 402 (step S106). After proprietor 202 operates the present invention (in accordance with the terms and conditions agreed upon), the present invention preferably provides reports and information to proprietor 202, substantially as described herein (step S108). As described above, the present invention preferably makes recommendations to proprietors 202 for improving ranking and listing in search engines. After reviewing the information provided by the present invention, in step S 110, the proprietor preferably modifies the web site in accordance with the recommendations made by the present invention. For example, the proprietor moves the location of content in web site 102, adds key terms to the body of web site 102, etc. Thereafter, in step S 112, the web site rank improves over time. The present invention, in step S114 preferably receives information from search engines 106 (step S 114) and report the information to proprietors 202 (step S116). Thereafter, the process ends at step S118.

Thus, the present invention comprises a business method in which information processor server providers 402 provide various combinations of features, as described herein, to providers 202 for a fee. In return, providers 202 realize substantial gains in search engine placement and ranking, and accordingly realize collateral benefits therefrom.

Fig. 8B illustrates steps associated with maintaining an optimized web site 102 in accordance with the present invention. At step S200, information regarding web site 102 is retrieved from a database or directly from the proprietor's 202 web site 102. Further, information is received (at step S202) from search provider 204. The information received from search engine provider 204 is preferably formatted and transmitted by the present invention to proprietor 202 (step S204). For example, at step S206, the present invention recommends changes to the web site 102 or in submissions, bids or other search engine related information to proprietors 202. Using the recommendations provided by the present invention, proprietors implement the recommendations and search engine ranking and listing improves as a result (step S208). Thereafter, the process loops back to step S200 as changes and search engine ranking, listing, or web site 102 optimization are discovered by the present invention.

Thus, the present invention provides an on-going relationship between information processor server provider 402, proprietors 202 and search engine providers 204. In this way, proprietors 102 are assured that information is current and relevant, thereby enabling proprietors 102 to make informed decisions with respect to web site optimizations and search engine optimization.

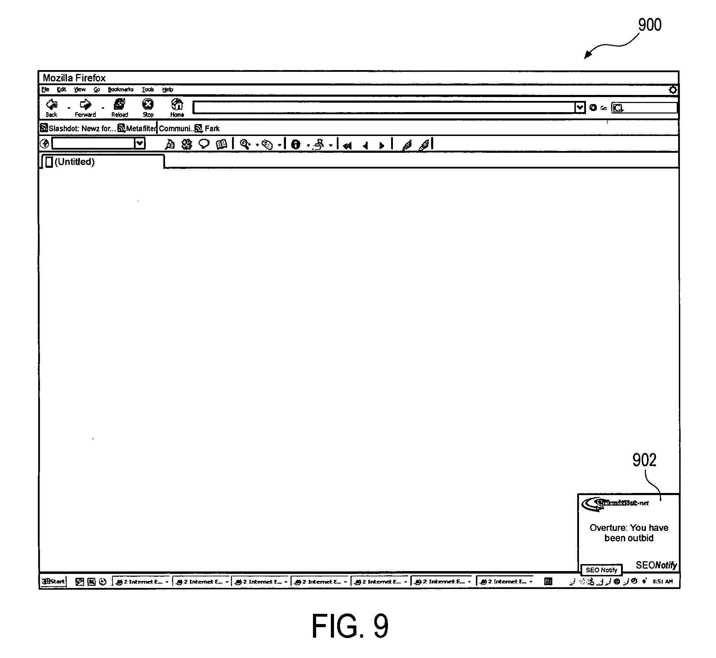

The present invention is now further described by way of an example and with reference to Fig. 9.

A hand-crafted jewelry retailer has developed an e-commerce Internet web sites to sell his jewelry on the Internet. The retailer understands that in order to draw traffic to his Internet site, he must list the site with at least one Internet search engine. The retailer is unsure of the most effective way to list his web site with search engines and, accordingly, visits a web site provided by information processor server provider 402.

After reviewing the description of services and tools offered by the information processor server provider 402, the retailer selects a program that provides submission option features, position check features, position tracking, keyword analysis, meta tag analysis, meta tag generation, competitor analysis, link tracking, keyword spider analysis, server up time checking, HTML analysis, load time analysis, browser compatibility checking and link checking. The retailer submits a fee, for example, by providing valid credit card information to provider 402 and downloads desktop application tool 304 and installs the tool on his computer.

After the application tool 304 is installed and configured, the retailer's Internet web site is analyzed by the present invention. In accordance with the present invention, the retailer submits the information to information processor server 302 regarding the retailer's business. The present invention preferably provides reports to the retailer in order to optimize his web site and improve the ranking and listing by search engines. For example, particular HTML tags are identified as being incompatible with certain browsers, syntax errors are identified in the HTML, image files are not provided with alternative representations and keyword use in the body of the web site is recommended.

The retailer reviews the information and recommendations made by the present invention and, accordingly, edits and modifies the Internet web site and corresponding HTML to optimize the web page in accordance with the teachings herein.

Thereafter, information processor server 302 preferably establishes communication with search engines 106 in order to submit the retailer's web site information. The search engines 106 receive the information from the information processor server 302 and list the retailer's web site in response to searches performed by Internet users 206.

After several weeks of reviewing reports provided by desktop application tool 304 and information processor server 302, the retailer decides that he wishes to bid on certain key terms in a search engine in order to improve his ranking and position. Thus, the retailer establishes a connection with information processor server 302 and submits information regarding the keyword term he wishes to bid on, and the amount of money he wishes to bid. In an embodiment of the present invention, an account is maintained by information processor server provider 402 and funds in the account are used to provide bids with the search engine. Of course, one skilled in the art will recognize that alternative embodiments are foreseen. For example, as the retailer can communicate directly with search engine 106 and submit information and/or bids directly thereto. Alternatively, the retailer establishes a communication session with information processor server 302 and is directed to one or more search engines identified by the retailer for submitting information and/or bids.

In yet another embodiment, the retailer uses desktop application tool 304 to identify one or more search engines that he wishes to be listed with and desktop application tool 304 preferably directs the retailer to the respective search engine(s). Thus, various methods can be employed to enable the retailer to submit his web site with one or more search engines.

After the bid has been received by the search engine, the retailer realizes an improvement in the placement and ranking of his web site by the search engine. Over time, however, the proprietor is out-bid by a competitor and, accordingly, is alerted by the present invention thereof. Fig. 9 is an example display screen 900 that illustrates an alert that is provided to proprietor 202 after the proprietor is out-bid on a search term by a competitor. As shown in Fig. 9, alert 902 informs proprietor 202 that he has been out-bid. The present invention preferably regularly informs the retailer of the placement information and optimization of the retailer's web site and, accordingly, the retailer maintains a current and well optimized Internet web site.

Using the features and tools of the present invention, retailers, and other businesses, organizations and individuals can realize improvement in search engine listing, placement and ranking. In addition to analyzing keywords, descriptions or other tags of the web site 102, the present invention also retrieves information regarding submissions to respective search engines, such as whether bids have been placed for key terms, or whether a pay per click arrangement has been established between the proprietor 202 and the search engine provider 204. Ultimately, improved traffic is generated and the web site(s) are more successful.

Thus, the present invention delivers search engine-related information, including organic search, paid inclusion search, bid for placement search, and web site optimization information to proprietors of web sites in order to offer proprietors a way to monitor aspects of promoting their web sites with search engines. More particularly, the present invention preferably informs proprietors of key terms that are associated with the proprietors' web sites in search engines. Further, the present invention informs proprietors of the respective position in a search results list that the proprietors' web sites for each key term associated the proprietors' web sites. Also, the present invention preferably informs proprietors of the daily, weekly, and monthly number of web site visitors who have selected a hyperlink to the proprietor's page; i.e., the number of impressions, from a list of search results. The present invention preferably informs proprietors of the number of impressions each key term has received on a daily, weekly, and monthly basis.

In an alternative embodiment, the present invention relates to Internet search engine listings, and, more particularly, to a module that electronically interfaces with a centrally located database to send and receive text or multimedia message alerts to mobile devices, such as cell phones, pagers, and two-way messaging pagers; regarding Internet search engine listings.

As noted above, effective search engine placement listing is necessary for a web site to be prominently represented, and, accordingly, found by Internet users. Unfortunately, information regarding search engine performance and the frequency and quality of search engine ranking is difficult to obtain in the prior art, making it increasingly difficult for a proprietor of a web site to ensure that his web site is well represented and prominently listed by a plurality of search engines.

The present invention solves the problems associated with prior art search engines, and preferably provides a mobile device alert system that keeps proprietors of web sites informed about Internet search engine listings and/or rankings.

In an alternative embodiment of the present invention, a module is configured to operate and/or remain active on an Internet web site server 102. The module preferably monitors the status of multiple users' Internet search engine listings. The software application preferably generates text or multimedia messages and automatically sends the messages to users' mobile devices. The software application preferably also monitors the status of incoming text or multimedia message replies, and performs actions based on the content of the replies.

The present invention is preferably deployed in the search engine optimization ("SEO") information and search engine marketing ("SEM") information and Search Engine markets, and enables proprietors 202 to have a much higher form of control over respective ranking in a search engine listing than was previously available in the prior art. Further, the proprietor's 202 involvement with day to day monitoring of search engine 106 accounts is improved, while the amount of time previously required to monitor the account is reduced. For example, web site proprietor 202 needs only to spend time on the account when there is an issue or an indication that an alteration or change to an account is warranted. In accordance with the present invention, proprietor 202 no longer, as in the prior art, needs to spend time going back to each particular search engine 106 with which the web site provided by internet web site server 102 is associated, logging in to a respective search engine 106, and, thereafter, determining how well the web site associated with server 102 is performing. Instead, and in accordance with the present invention, information is electronically transmitted from search engine 106 to a server computer system, and the server computer's software transmits information to proprietors 202 via text or multimedia messages to the proprietors' mobile devices. Also in accordance with the present invention, the proprietor may choose to respond to the text or multimedia messages with predefined commands. The server computer system's software processes the incoming replies and performs actions relating to the proprietor's account based on the command received.

Thus, the present invention delivers search engine-related information, including organic search, paid inclusion search, bid for placement search, and web site optimization information to proprietors 202 in order to offer an improved way to monitor aspects of promoting web sites via search engines 106. More particularly, the present invention preferably informs proprietors 202 of low fund balances in paid inclusion search accounts and bid for placement accounts. Further, the present invention preferably informs proprietors of reduced ranking in search results, search engine listings that are no longer visible to search engine users, and any other alerts the proprietor asks to be notified about.

In accordance with another aspect, the present invention preferably processes text or multimedia message replies and performs actions related to the proprietor's search engine account. Actions the present invention preferably performs include adding funds to a paid inclusion or bid for placement account, changing bids on a bid for placement account, taking listings offline, putting listings back online, and requesting statistics.

Other features and advantages of the present invention will become apparent from the following description of the invention which refers to the accompanying drawings.

In one embodiment of the present invention, information pertaining to search engine optimization and search engine paid inclusion is transmitted to a proprietor of a web site via text or multimedia messages sent to the proprietor's mobile device(s).

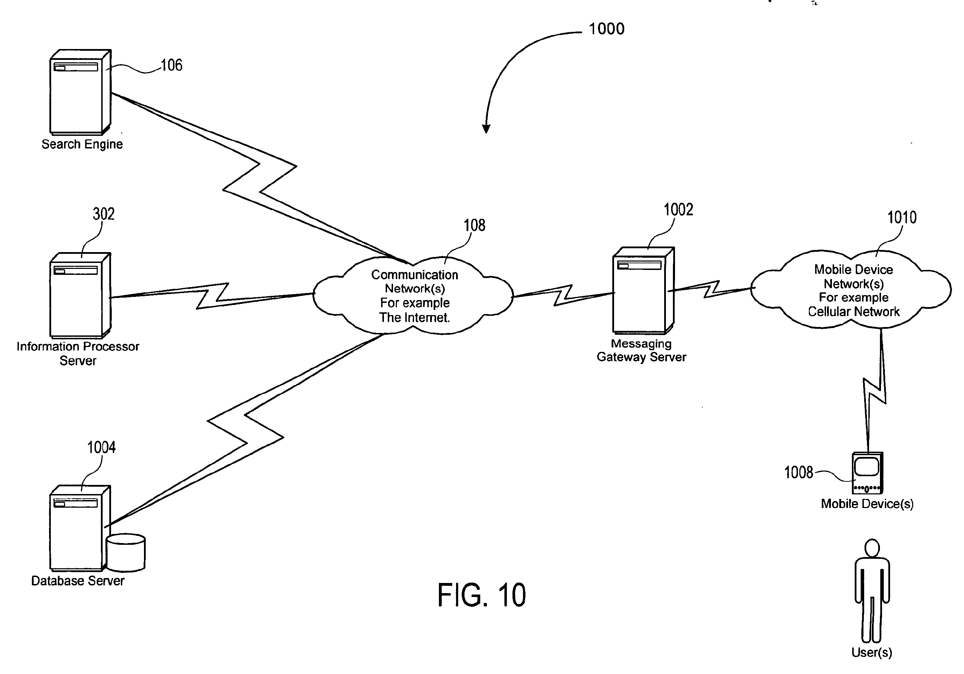

Fig. 10 illustrates an example arrangement of devices in accordance with an alternative embodiment of the present invention. In this alternative embodiment, software residing on an information processor server 302 checks for updates to a user's search engine listings and accounts. Updates can be checked for either by polling the search engine's 106 server directly, or by checking a local database for new changes. If there are changes that the proprietor 202 needs to be notified about, text or multimedia messages are generated and sent to messaging gateway server 1002. The messaging gateway server 1002 can be set up in multiple ways, but preferably has the ability to take messages from information processor server 302 and transmit the messages over mobile device network 1010 for delivery to a user's mobile device 1008, usually by short messaging service ("SMS"), or multimedia messaging service ("MMS") technologies, as know to those skilled in the art. The messaging gateway server 1002 also, preferably, electronically delivers text/multimedia messages received from users back to the information processor server 302.

Preferably, messages received by information processor server 302 from messaging gateway server 1002 are compared to an existing command set, and are processed accordingly. Messages that could be processed include messages to modify a user's account on search engine 106, or messages that request more information to be sent to the user in another text/multimedia message.

If the user's account requires changes due to a message, information processor server 302 sends requests to a respective search engine 106 to perform the command requested. Another text/multimedia message can then be sent back to the user via the messaging gateway server 1002 confirming success, or alerting the user of any problems that occurred. As noted above, a database representing users' accounts is provided, and preferably maintained, for example, on database server 1004.

If a command is received that requests additional information, another text/multimedia message is formulated by information process server 302, and sent to the messaging gateway server 1002 for eventual delivery to the user. Messages could include requests for current click-through rates, the amount spent on a particular account, remaining funds balance, or picture graphs of current activity.

All messages received are preferably verified for security by checking the phone number the message was received from, and by using a text/numeric code that is preferably sent with each message. If the security checks are not passed, the received messages will be ignored.

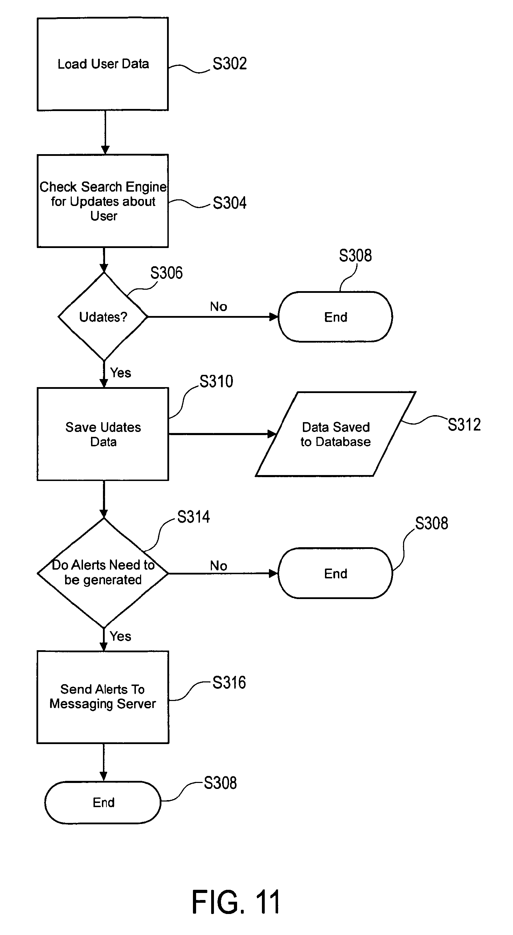

Fig. 11 is a flow chart that illustrates steps associated with an embodiment of the present invention. As shown in Fig. 11, at step S302, user data is loaded into a database maintained on database server 1004. Thereafter, information processor server 302 preferably electronically checks search engine 106 for any updated information regarding a web site provided by Internet web site server 102 (step S304). For example, a bid may have been recently received by search engine 106 which effectively lowers the ranking of a web site provided by Internet web site server 102. At step S306, a determination is made whether any updates have occurred. If not, then the process ends (step S308). If an update has occurred, then the process branches to step S310 and updated data is preferably saved to the database maintained by database server 1004 (steps S312, S314).

Continuing with reference to the flowchart shown in Fig. 11, at step S314, another determination is made whether one or more alerts needs to be generated. If not, the process terminates (S308). Otherwise, the process branches to step S316 and one or more alerts are generated and transmitted electronically to message gateway server 1002 to be transmitted via mobile device network 1010 and delivered to mobile device 1008 (step S316). Thereafter, the process terminates at step S308.

Thus, an alternative embodiment enabling the notification of search engine data via a messaging service platform is further provide by the preset invention.

As will be apparent to one skilled in the art, the present invention provides tremendous improvements over prior art processes related to monitoring and affecting the ranking, placement and appearance of web sites with respect to one or more search engines. Prior art processing steps that were performed by millions of individual computers in order to determine and/or affect the ranking of corresponding web sites by various search engines are substantially reduced by the present invention. The present invention reduces the number of instructions required to be processed and executed by CPU 502, reduces the number of computing devices that execute instructions, and, accordingly, reduces energy consumption, reduces heat production and provides other related technical benefits over prior art systems and methods.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. A system for delivering processed search engine information to a desktop application tool, the system comprising:
an information processor connected to a communication network;
a search engine communication module provided with the information processor enabling a communication session between the information processor and at least one search engine;
a search engine information database accessible to the information processor and adapted to store electronic search engine information received from the at least one search engine;
a data processing module provided with the information processor operable to process the search engine information to provide the processed search engine information;
the desktop application tool operable to be installed on a computing device, to receive web site information related to at least one web site from a user, and to communicate with the information processor in order either:
to receive the processed electronic search engine information;
to transmit the web site information; or
to receive the processed electronic search engine information and to transmit the web site information,
wherein the search engine information is received from the at least one search engine by the information processor, and processed by the data processing module into processed search engine information, and the processed search engine information is transmitted from the information processor to the desktop application tool.

2. The system of claim 1, wherein the search engine information relates to at least one selected from the group consisting of organic searching, paid inclusion searching, and bid for placement searching.

3. The system of any of the preceding claims, further comprising a web site monitoring module provided with the information processor that is operable to monitor the at least one web site to verify whether the at least one web site is available over the communication network.

4. The system of claim 3, further comprising an alert module provided with the desktop application tool, wherein the alert module electronically transmits an alert of at least one condition as a function of the processed search engine information.

5. The system of claim 4, wherein the condition is at least one of delivery of processed search engine information, an account renewal status update, and a web site uptime status update.

6. The system of any of the preceding claims, wherein the desktop application tool initiates communication with the information processor.

7. The system of any of the preceding claims, wherein the information processor initiates communication with the desktop application tool.

8. The system of any of the preceding claims, further comprising an report module provided with at least one selected from the group consisting of the desktop application tool and the information processor and operable to provide a report.

9. The system of claim 8, wherein the report module provides at least one report type selected from the group consisting of a web site overview, a keyword position track score, submission to search engines, a paid inclusion status, daily web site uptime, key term search engine listing, number of web site visitors connected via a search engine, number of impressions a key term has received over time, changes in ranking resulting from at least one competing bid, search engine account information, and current bid amounts for key terms.

10. The system of any of the preceding claims, wherein the search engine information represents at least one of paid inclusion information, web site ranking information, web site submission information, key term bid information, and account status information.

11. A system for delivering processed search engine information to a mobile device, the system comprising:
an information processor connected to a communication network;
a search engine communication module provided with the information processor enabling a communication session between the information processor and at least one search engine;
a search engine information database accessible to the information processor and adapted to store electronic search engine information received from the at least one search engine regarding a web site;
a data processing module provided with the information processor operable to process the search engine information to provide the processed search engine information;
a messaging gateway server coupled to a mobile device network, wherein the messaging gateway server is operable to receive from the information processor the processed search engine information in a first format, to modify the processed search engine information to a second format, and to transmit the processed search engine information in the second format via the mobile device network to the mobile device,
wherein the mobile device is operable to receive the processed electronic search engine information in the second format.

12. The system of claim 11, wherein the search engine information relates to at least one selected from the group consisting of organic searching, paid inclusion searching, and bid for placement searching.

13. The system of claim 11 or 12, further comprising a monitoring module provided with the information processor for monitoring the web site to verify whether the web site is available over the communication network.

14. The system of claim 13, further comprising an alert module for providing an alert to the mobile device, wherein the alert represents at least one condition as a function of the processed search engine information.

15. The system of claim 14, wherein the condition is at least one of delivery of processed search engine information, an account renewal status update, and a web site uptime status update.

16. The system of any of claims 11-15, wherein the information processor checks for updates with the at least one search engine regarding the web site.

17. The system of any of claims 11-16, wherein the information processor initiates communication with the messaging gateway server.

18. The system of any of claims 11-17, further comprising a report module for providing reports by the information processor.

19. The system of claim 18, wherein the reports regard at least one selected from the group consisting of a web site overview, a keyword position track score, submission to search engines, a paid inclusion status, daily web site uptime, key term search engine listing, number of web site visitors connected via a search engine, number of impressions a key term has received over time, changes in ranking resulting from at least one competing bid, search engine account information, and current bid amounts for key terms.

20. The system of any of the claims 11-19, wherein the search engine information represents at least one of paid inclusion information, web site ranking information, web site submission information, key term bid information, and account status information.

21. A method for managing a plurality of respective search engine accounts for a plurality of web sites, the method comprising:
maintaining a database operable to store web site electronic information regarding the plurality of web sites and search engine electronic information regarding the plurality of search engines;
providing a desktop application tool to the plurality of web sites;
maintaining a respective account for each of the plurality of web sites;
receiving a respective payment from each of the plurality of web sites and saving each respective payments in the respective accounts;
using at least one of the respective payments to maintain at least one of the respective search engine accounts;
receiving electronic search engine information from the at least one of the respective search engines regarding the respective web sites and storing the electronic search engine information in the database;
processing the electronic search engine information to provide electronic processed search engine information; and
transmitting the electronic processed search engine information to the desktop application tool.

22. The method of claim 21, wherein the electronic processed search engine information relates to a keyword position track score, a current submission to a search engine, paid inclusion status information, daily web site uptime information, key term search engine listing, number of web site visitors connected via a search engine, number of impressions a key term has received over time, changes in ranking resulting from at least one competing bid, search engine account information, and current bid amounts for key terms.

23. The method of any of claims 21-22, wherein a proprietor a least one of the plurality of web sites modifies the at least one web site in response to receiving the processed search engine information.

24. The method of any of claims 21-23, further comprising the charging a fee to proprietors of the plurality of web sites.
